# EUROPÄISCHE PATENTANMELDUNG

(11) **EP 4 707 758 A1**
(43) Veröffentlichungstag der Anmeldung: **11.03.2026**
(21) Anmeldenummer: 25198054.6
(22) Anmeldetag: 26.08.2025
(51) Int. Cl.: G01J 5/00, B21B 38/00, G01N 21/86

(54) **VERFAHREN ZUR BESTIMMUNG EINER BANDTEMPERATUR AN EINEM BEWEGTEN METALLBAND**

(30) Priorität: 05.09.2024 DE 102024125496
(71) Anmelder: ThyssenKrupp Steel Europe AG, 47166 Duisburg (DE)
(72) Erfinder: Nowack, Niklas, 47166 Duisburg (DE); Horwat, Kai Andre, 47166 Duisburg (DE); Lauer, Benjamin, 47166 Duisburg (DE); Klöckner, Michael, 47166 Duisburg (DE); Korpogyan, Martin, 47166 Duisburg (DE)
(74) Vertreter: ThyssenKrupp Steel Europe AG

(57) **Zusammenfassung**

Die Erfindung betrifft ein Verfahren zur Bestimmung einer Bandtemperatur an einem bewegten Metallband (1), wobei das Metallband (1) an mindestens einem Infrarotsensor (10) und/oder an mindestens einer Wärmebildkamera (10) vorbeigeführt wird, wobei der Infrarotsensor (10) und/oder die Wärmebildkamera (10) zumindest bereichsweises die Oberfläche des Metallbands (1) erfasst, wobei in Bewegungsrichtung des Metallbands (1) lokal Referenzbereiche (2) eingebracht worden sind, welche einen höheren Emissionsgrad aufweisen im Vergleich zur restlichen Oberfläche des Metallbands (1).

## Beschreibung

Die Erfindung betrifft ein Verfahren zur Bestimmung einer Bandtemperatur an einem bewegten Metallband, wobei das Metallband an mindestens einem Infrarotsensor und/oder an mindestens einer Wärmebildkamera vorbeigeführt wird, wobei der Infrarotsensor und/oder die Wärmebildkamera zumindest bereichsweise die Oberfläche des Metallbands erfasst.

Für einen kontinuierlichen Prozess in einer metallverarbeitenden Industrie, vorzugsweise in einer Stahlverarbeitung und Oberflächenveredelung sind in einigen Prozessstufen Bearbeitungsvorgänge in Durchlauföfen erforderlich. Dabei werden Metallbänder mit einer vorgegebenen Geschwindigkeit kontinuierlich durch Öfen gefahren und auf definierte Temperaturen erwärmt. Für die Überwachung und Regelung muss die Temperatur des eingesetzten Metallbandes bekannt sein. Diese wird überwiegend berührungslos durch Infrarotsensoren (Pyrometer) und/oder Wärmebildkameras ermittelt. Bei diesen Verfahren ist es zwingend erforderlich, den Emissionsgrad des Materials zu kennen, der von Werkstoff, Geometrie, Oberflächenbeschaffenheit und Temperatur selbst abhängig ist. Wird dieser nicht mit ausreichender Genauigkeit vorgegeben, ist die Temperaturmessung fehlerbehaftet und gibt nicht hinreichend genaue Ergebnisse aus. Ein beispielsweise häufig auftretender Fall ist, dass zwei aufeinanderfolgende Metallbänder messtechnisch einen Temperatursprung respektive ein Temperaturdelta aufweisen, obwohl real beide Metallbänder identisch temperiert sind.

Der Emissionsgrad ist ein wesentlicher Faktor für die möglichst präzise Temperaturmessung mit Infrarotsensoren und Wärmebildkameras. Er ist von verschiedenen Einflüssen abhängig und kann sich auch innerhalb von Materialien stark unterscheiden. In Abhängigkeit vom Anwendungsziel muss er möglichst hinreichend genau ermittelt und eingestellt werden. Werden auf Basis einer fehlerhaften Temperaturmessung die Ofenparameter fälschlicherweise nicht korrekt eingestellt, hat dies Auswirkungen auf Qualität und Eigenschaften des Metallbandes.

Aufgabe der Erfindung war es, ein gattungsgemäßes Verfahren zur Bestimmung der Bandtemperatur anzugeben, mit welchem ein im Wesentlichen konstanter und wiederholgenauer Emissionsgrad bereitgestellt werden kann.

Die Aufgabe wird mit einem Verfahren zur Bestimmung einer Bandtemperatur an einem bewegten Metallband mit den Merkmalen des Anspruchs 1 gelöst.

Weitere vorteilhafte Ausgestaltungen und Weiterentwicklungen gehen aus der nachfolgenden Beschreibung hervor. Ein oder mehrere Merkmale aus den Ansprüchen, der Beschreibung wie auch den Figuren können mit einem oder mehreren Merkmalen aus weiteren Ausgestaltungen der Erfindung verknüpft werden. Es können auch ein oder mehrere Merkmale aus den unabhängigen Ansprüchen durch ein oder mehrere Merkmale ersetzt werden und mit diesen verknüpft werden. Der vorgeschlagene Gegenstand ist nur als Entwurf zur Formulierung der Erfindung aufzufassen, ohne diesen aber zu beschränken.

Die erfindungsgemäße Lehre betrifft ein Verfahren zur Bestimmung einer Bandtemperatur an einem bewegten Metallband, wobei das Metallband an mindestens einem Infrarotsensor und/oder an mindestens einer Wärmebildkamera vorbeigeführt wird, wobei der Infrarotsensor und/oder die Wärmebildkamera zumindest bereichsweise die Oberfläche des Metallbands erfasst, wobei in Bewegungsrichtung des Metallbands lokal Referenzbereiche eingebracht worden sind, welche einen höheren Emissionsgrad aufweisen im Vergleich zur restlichen Oberfläche des Metallbands.

Der Emissionsgrad ist ein Maß dafür, wie effektiv ein Material Wärmestrahlung im Vergleich zu einem idealen Strahler, dem sogenannten schwarzen Körper, emittiert. Wärmestrahlung wird von allen Körpern respektive jedem Material mit einer Temperatur höher 0 K, also -273,15° C, abgegeben. Im Fall von Metallen kann der Emissionsgrad in der Regel temperaturabhängig sein. Ein höherer Emissionsgrad führt dazu, dass eine Temperaturmessung möglichst präzise durchgeführt werden kann.

Eine genaue Bandtemperaturbestimmung soll durch eingebrachte Referenzbereiche ermöglicht werden. Die in Bewegungsrichtung des Metallbands lokal eingebrachten Referenzbereiche sollen einen konstanten und definierten Emissionsgrad aufweisen, um so eine exakte und im Wesentlichen wiederholgenaue Temperaturbestimmung durchführen zu können.

Das Funktionsprinzip von Infrarotsensoren und Wärmebildkameras ist in der Fachwelt bekannt und daher geläufig. Die Wärmebildkamera, gelegentlich auch als Thermografie-, Thermal- oder Infrarotkamera bezeichnet, ist ein bildgebendes Gerät, welches auf dem Empfang von Infrarotstrahlung basiert. Die Nutzung einer Wärmebildkamera hat insbesondere den Vorteil zur Folge, dass eine zweidimensionale Wärmestrahlung erfasst werden kann. Weiterhin bietet die Wärmebildkamera den Vorteil die zweidimensionale Wärmestrahlung, sofern gewünscht, auch in Echtzeit zur Verfügung stellen zu können. Die räumliche Auflösung der Messdaten ist insbesondere von der Art und Anbringung der Wärmebildkamera in Bezug auf das vorbeibewegte Metallband abhängig. Eine Bestimmung der Metallbandtemperatur kann mithin mittels einer/s datenverarbeitenden Software respektive Programmes erfolgen. Mit anderen Worten werden die Daten des Momentzustandes, welche von der Wärmebildkamera aufgenommen worden sind, in Temperaturinformationen weiterverarbeitet und bereitgestellt. Derartige Software/Programmesind kommerziell verfügbar.

Die Temperaturinformation kann beispielsweise kontinuierlich über eine Metallbandlänge visualisiert und/oder dokumentiert werden. Der Vorteil einer kontinuierlichen Bandtemperaturbestimmung ist, dass zu jedem Zeitpunkt und insbesondere in Echtzeit bei eventuellen Unstimmigkeiten auf den Prozess eingewirkt werden kann.

Wesentlicher Vorteil des Erfassens der Wärmestrahlung ist, dass eine im Wesentlichen durchgehende berührungslose und auch in Echtzeit erfolgende Temperaturbestimmung an der vorbeibewegten Oberfläche des Metallbandes erfolgen kann. Ebenfalls von Vorteil ist, dass dadurch eine kontinuierliche Überwachung des durchlaufenden Metallbandes möglich ist.

Die Referenzbereiche sollten eine resultierende Pixelanzahl auf der Detektorfläche eines (Infrarot-)Sensors respektive einer Wärmebildkamera von 3 px x 3 px, vorzugsweise 5 px x 5 px, nicht unterschreiten. Anhand einer beispielhaft ausgewählten Wärmebildkamera Pyroview 640G der Firma Dias lässt sich jeweils eine Fläche der Referenzbereiche mit mindestens 2,1 mm x 2,1 mm, insbesondere mindestens 2,8 mm x 2,8 mm, vorzugsweise mindestens 3,5 mm x 3,5 mm bei einem Abstand von 1 m zwischen Wärmebildkamera und Messoberfläche (Referenzbereich) beziffern.

Die Bandtemperatur wird mithin an der Oberfläche des Metallbandes bestimmt. Somit entspricht die Bandtemperatur der Oberflächentemperatur des Metallbands.

Der Begriff des Metallbands umfasst hierbei Metallbänder aus beliebigen metallischen Materialien. Bevorzugt kann das Metallband als Stahlband ausgebildet sein.

Die zu bestimmende Bandtemperatur kann oberhalb von 20 °C bis 500 °C betragen, insbesondere mindestens 50 °C, vorzugsweise mindestens 100 °C, bevorzugt mindestens 150 °C, insbesondere maximal 450 °C, vorzugsweise maximal 400 °C, bevorzugt maximal 350 °C. Damit kann beispielhaft ein warmer Zustand mit entsprechender Bandtemperatur bestimmt werden. Die Bestimmung der Bandtemperatur kann somit in Wärmebehandlungsprozessen von Metallbändern erfolgen.

Die zu bestimmende Bandtemperatur kann alternativ auch unterhalb von 20 °C, somit beispielsweise zwischen -100 °C und 15 °C betragen, insbesondere mindestens -80 °C, vorzugsweise mindestens -50 °C, bevorzugt mindestens -30 °C, insbesondere maximal 10 °C, vorzugsweise maximal 5 °C, bevorzugt maximal 0 °C. Damit kann beispielhaft ein kalter respektive kühler Zustand mit entsprechender Bandtemperatur bestimmt werden. Die Bestimmung der Bandtemperatur kann somit in Kältebehandlungsprozessen von Metallbändern erfolgen.

Gemäß einer Ausgestaltung kann der Emissionsgrad in den lokal eingebrachten Referenzbereichen höher als der vorliegende Emissionsgrad des Materials und bis zu 100 % eingestellt werden. Je höher der Emissionsgrad, umso geringer ist die Beeinflussung der Messung durch Reflexionen der Umgebung. Der Emissionsgrad kann insbesondere mit 65 %, 67 %, 71 %, vorzugsweise mit mindestens 75 %, 78 %, 81 %, bevorzugt mit mindestens 83 %, 85 %, eingestellt werden. Der eingestellte Emissionsgrad kann insbesondere mit maximal 98 %, 96 %, vorzugsweise mit maximal 93 %, 91 % eingestellt werden.

Gemäß einer Ausgestaltung können sich die Emissionsgrade zwischen den einzelnen lokal eingebrachten Referenzbereichen maximal um 15,0 % unterscheiden. Dadurch können beispielsweise Schwankungen und/oder Toleranzen reduziert werden und mithin ein wiederholgenaues Temperaturergebnis erzielt werden. Der Unterschied kann insbesondere maximal 8,5 %, vorzugsweise maximal 6,0 %, bevorzugt maximal 3,5 %. Der Unterschied kann aufgrund von Toleranzen mindestens 0,1 % betragen.

Konventionell wird die Oberfläche des Metallbands, im Wesentlichen über die gesamte Breite oder aber auch entlang eines Abschnitts in der Mitte und/oder im Kantenbereich des Metallbands erfasst. Diese entspricht somit der restlichen Oberfläche und unterscheidet sich insbesondere hinsichtlich des Emissionsgrades von den lokal eingebrachten Referenzbereichen. Für die restliche Oberfläche des Metallbands ist zwar der Emissionsgrad des eingesetzten Materials bekannt, jedoch nur mit höheren Toleranzen und kann dabei auch variieren. Um einen stabilen, statischen und reproduzierbaren Emissionsgrad sicherstellen respektive bereitstellen zu können, werden die Referenzbereiche genutzt, so dass es durch Messung in allen Bereichen (Referenzbereich(e) und Rest des Bandes) möglich ist, sowohl neben der annähernd wahren Bandtemperatur auch den Emissionsgrad des Materials allgemein zu bestimmen. So kann gemäß einer Ausgestaltung ein Verlauf der Bandtemperatur zwischen mindestens zwei lokal eingebrachten Referenzbereichen interpoliert werden. Durch Differenzbildung der auf der restlichen Oberfläche und auf den Referenzbereichen ermittelten Temperatur kann der Emissionsgrad errechnet werden.

Erfindungsgemäß werden die lokalen Referenzbereiche optisch und/oder thermisch strukturiert. Dazu können die lokalen Referenzbereiche beispielsweise am bewegten Metallband mittels mindestens eines Lasers, insbesondere mittels mindestens eines Ultra-Kurz-Puls-Lasers, strukturiert werden. Ein Strukturieren von Metallbändern mittels Laser ist beispielhaft in der EP 3 405 306 B1 beschrieben.

Die Bearbeitung zur Strukturierung der Referenzbereiche auf dem Metallband kann auch mit weiteren üblichen bekannten Strukturierungsverfahren umgesetzt werden, wobei chemische, thermische und/oder mechanische Verfahren zur Anwendung kommen können.

Des Weiteren können die lokalen Referenzbereiche erfindungsgemäß mechanisch strukturiert werden. Die mechanische Strukturierung kann zusätzlich oder vorzugsweise alternativ zum optischen und/oder thermischen Strukturieren erfolgen. Dazu können beispielsweise am bewegten Metallband mittels mindestens eines Prägewerkzeugs, insbesondere mittels mindestens einer Prägewalze lokale Referenzbereiche strukturiert werden. Dabei kann das Prägewerkzeug mit einer entsprechenden Textur zumindest in dem Bereich als Negativ bearbeitet sein, welcher positiv die lokalen Referenzbereich erzeugen kann. Die Bearbeitung zur Texturierung kann mit üblichen bekannten Texturierverfahren umgesetzt werden, wobei chemische, thermische und/oder mechanische Verfahren zur Anwendung kommen können. Ein Beispiel zum Lasertexturieren von Werkstücken, vorzugsweise von Walzen, ist in der EP 3 172 006 B1 beschrieben.

Gemäß einer Ausgestaltung werden die lokalen Referenzbereiche in einem definierten Abstand zueinander in Bewegungsrichtung eingebracht. Der Vorteil eines definierten Abstands, sprich mit einer bestimmten Periodizität ist, dass Temperaturschwankungen beispielsweise innerhalb eines Ofens ermittelt werden können. Der Abstand zwischen zwei in Bewegungsrichtung des Metallbandes eingebrachten Referenzbereiche kann zwischen 0,2 m und 200 m betragen. Der Abstand kann insbesondere mindestens 0,5 m, 1 m, 2 m, vorzugsweise mindestens 5 m, 7 m, 10 m betragen. Der Abstand kann insbesondere maximal 180 m, 150 m, 120 m, vorzugsweise maximal 100 m, 80 m, 50 m betragen.

Gemäß einer Ausgestaltung werden die lokalen Referenzbereiche auf definierten Positionen auf dem Metallband, insbesondere in der Metallbandmitte eingebracht. Wenn beispielsweise an einem unbeschichteten Metallband Referenzbereiche in der Mitte oder auf anderen definierten Positionen eingebracht werden und das Metallband im Folgeprozess insbesondere mit einem Überzug beschichtet wird, können die Referenzbereiche durch den Auftrag des Überzugs überdeckt werden, so dass sie nicht störend auf Folgeprozesse wirken.

Gemäß einer zusätzlichen oder alternativen Ausgestaltung die lokalen Referenzbereiche im Kantenbereich des Metallbands eingebracht. Dies kann den Vorteil haben, dass im Falle eines Besäumens der Kantenbereiche keine Referenzbereiche am Metallband verbleiben, welche eventuell störend auf Folgeprozesse wirken könnten.

Gemäß einer Ausgestaltung wird in den lokalen Referenzbereichen eine Struktur mit folgender Oberflächencharakteristik eingestellt, ermittelt nach DIN EN ISO 21920-2:2022-12, Ra zwischen 2,40 µm und 10,50 µm, Rsk zwischen -0,25 und 0,25, Rz zwischen 14,5 µm und 30 µm, Rp zwischen 7,0 µm und 15,0 µm, Rpc zwischen 14 1/mm und 23 1/mm.

Der arithmetische Mittelwert der Höhe Ra kann insbesondere mindestens 2,45 µm, vorzugsweise mindestens 2,50 µm, bevorzugt mindestens 2,55 µm, besonders bevorzugt mindestens 2,60 µm betragen. Der arithmetische Mittelwert der Höhe Ra kann insbesondere maximal 9,20 µm, vorzugsweise maximal 7,0 µm, bevorzugt maximal 6,80 µm, besonders bevorzugt maximal 5,50 µm betragen.

Die Schiefe Rsk kann insbesondere mindestens -0,22, vorzugsweise mindestens -0,20, bevorzugt mindestens -0,18, besonders bevorzugt mindestens -0,16 betragen. Die Schiefe Rsk insbesondere maximal 0,22, vorzugsweise maximal 0,20, bevorzugt maximal 0,18, besonders bevorzugt maximal 0,16 betragen.

Die maximale Höhe Rz kann insbesondere mindestens 15,0 µm, vorzugsweise mindestens 15,5 µm, bevorzugt mindestens 16,0 µm, besonders bevorzugt mindestens 16,5 µm betragen. Die maximale Höhe Rz kann insbesondere maximal 28,0 µm, vorzugsweise maximal 25,0 µm, bevorzugt maximal 23,0 µm, besonders bevorzugt maximal 21,0 µm betragen.

Die mittlere Spitzenhöhe Rp kann insbesondere mindestens 7,5 µm, vorzugsweise mindestens 8,0 µm, bevorzugt mindestens 8,5 µm, besonders bevorzugt mindestens 9,0 µm betragen. Die mittlere Spitzenhöhe Rp kann insbesondere maximal 14,0 µm, vorzugsweise maximal 13,0 µm, bevorzugt maximal 12,0 µm, besonders bevorzugt maximal 11,0 µm betragen.

Die Spitrenzahlkenngröße Rpc kann insbesondere mindestens 14,5 1/mm, vorzugsweise mindestens 15 1/mm, bevorzugt mindestens 15,5 1/mm, besonders bevorzugt mindestens 16 1/mm betragen. Die Spitrenzahlkenngröße Rpc kann insbesondere maximal 22,5 1/mm, vorzugsweise maximal 22 1/mm, bevorzugt maximal 21,5 1/mm, besonders bevorzugt maximal 21 1/mm betragen.

Mit dem erfindungsgemäßen Verfahren ist eine bevorzugte vollflächige und kontinuierliche Bestimmung einer Bandtemperatur an einem bewegten Metallband in einem Fertigungsprozess der metallverarbeitenden Industrie insbesondere automatisiert möglich.

Ein weiterer Vorteil des beschriebenen Verfahrens ist, dass Wärmebildkameras und/oder Infrarotsensoren in gegenwärtig üblichen Produktionsbetrieben standardmäßig verwendet werden, wodurch zum einen eine vergleichsweise günstige Beschaffung und Benutzung gewährleistet ist und zum anderen auch die zur Benutzung erforderlichen apparativen Vorrichtungen sowie Kompetenzen in vielen Fällen bereits vorhanden sind.

Das erfindungsgemäße Verfahren kann überall in Bereichen zur Anwendung kommen, in welchen die exakte Kenntnis der Bandtemperatur in der metallverarbeitenden Industrie, sei es bezogen auf Erwärmen aber auch bezogen auf Kühlen, zum Weiterprozessieren der Metallbänder erforderlich ist. So zum Beispiel zum Wärmebehandeln von Stahlbändern in Durchlauföfen von Schmelztauchbeschichtungsanlagen oder auch in Durchlaufglühen, insbesondere im Temperaturbereich zwischen 50 °C und 500 °C, aber auch zum Kühlen von zum Beispiel Elektroband unterhalb von 20 °C.

Im Folgenden werden konkrete Ausgestaltungen der Erfindung mit Bezugnahme auf die Zeichnung im Detail näher erläutert. Die Figuren und begleitende Beschreibung der resultierenden Merkmale sind nicht beschränkend auf die jeweiligen Ausgestaltungen zu lesen, dienen jedoch der Illustration beispielhafter Ausbildungen der Erfindung. Weiterhin können die jeweiligen Merkmale untereinander wie auch mit Merkmalen der obigen Beschreibung genutzt werden für eine mögliche Fortentwicklung und Verbesserung der Erfindung, speziell bei zusätzlichen Ausgestaltungen, die nicht dargestellt sind.

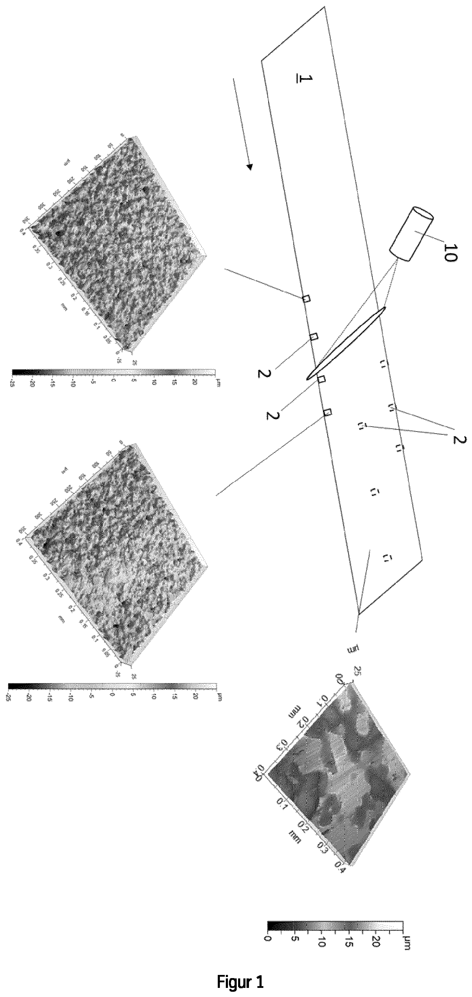

**Figur 1** zeigt eine schematische perspektivische Darstellung eines Ausführungsbeispiels zur Durchführung eines erfindungsgemäßen Verfahrens. Das Verfahren sieht eine Bestimmung einer Bandtemperatur an einem bewegten Metallband (1) vor, wobei das Metallband (1) an mindestens einem Infrarotsensor (10) und/oder an mindestens einer Wärmebildkamera (10) vorbeigeführt wird. Dabei erfasst der Infrarotsensor (10) und/oder die Wärmebildkamera (10) zumindest bereichsweises oder aber auch einen Teil vollständig über die Breite des Metallbands (1) die Oberfläche des Metallbands (1). In Bewegungsrichtung des Metallbands (1) sind lokal Referenzbereiche (2) eingebracht worden, welche einen höheren Emissionsgrad aufweisen im Vergleich zur restlichen Oberfläche des Metallbands (1).

Die lokalen Referenzbereiche (2) können mechanisch und/oder thermisch strukturiert werden. wobei die lokalen Referenzbereiche (2) in einem definierten Abstand zueinander in Bewegungsrichtung eingebracht werden. Die lokalen Referenzbereiche (2) werden im Kantenbereich des Metallbands (1) eingebracht, einseitig oder auch beidseitig, strichliniert, oder auch alternativ oder zusätzlich in der Metallbandmitte, strichliniert, möglich.

Die aus den jeweiligen Bereichen dargestellten Aufnahmen sind beispielhafte Ausführungen, wie die Struktur in den Referenzbereichen (2) sowie eines Teilausschnitts der restlichen Oberfläche eines Metallbands (1), in diesem Fall beispielhaft an einem Stahlband, unbeschichtet und kaltgewalzt. Die Referenzbereiche (2) wurden mit einem Laser strukturiert.

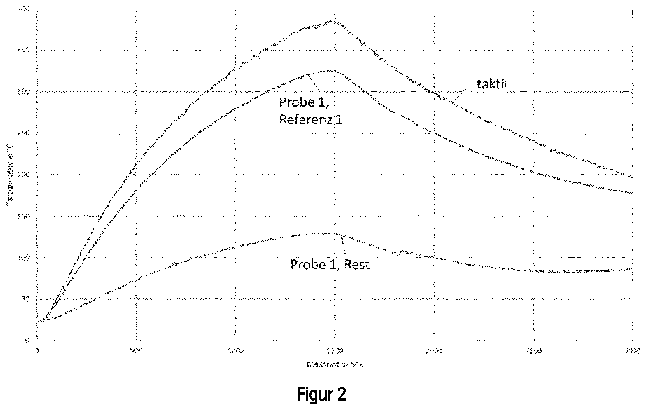

An zwei unbeschichteten Stahlproben wurden jeweils drei Referenzbereiche (2) mit jeweils einer Fläche von etwa 100 mm² mit einem Laser (Pulsdauer 10 ps @2MHz FixBurst 4, mittlere Leistung 20 W, Pitch 3 µm), somit thermisch und/oder optisch, strukturiert und im Labormaßstab mit einer Wärmebildkamera kontinuierlich während einer Wärmebehandlungsphase der Stahlproben, welche zwischen 20 °C und 380 °C durchgeführt wurde, erfasst und dabei die Temperatur der Oberfläche der Stahlproben bestimmt, s. **Figur 2****,** wobei das obere Temperaturprofil taktil gemessen wurde und somit der nahezu exakten Oberflächentemperatur entsprach, sowie die Emissionsgrade der unterschiedlichen Bereiche auf der Oberfläche der Stahlproben. Aufnahmen der Topografie der Stahlproben erfolgten mittels Konfokalmikroskop. Die damit erfassten Daten wurden Filteroperationen zugeführt, welche mit Hilfe einer Auswertesoftware, beispielsweise MountainsMap von digital surf, durchgeführt wurden. Die charakteristischen Kenngrößen Ra, Rz, Rsk, Rp, Rpc wurden in Anlehnung an die DIN EN ISO 21920-2:2022-12 ermittelt und sind in Tabelle 1 für die erste Stahlprobe und in Tabelle 2 für die zweite Stahlprobe zusammengefasst.

**Tabelle 1**

| **Probe 1** | **Ra** | **Rsk** | **Rz** | **Rp** | **Rpc** | **Emissionsgrad** |
|---|---|---|---|---|---|---|
| Referenz 1 | 4 | 0,003 | 24 | 11,7 | 18 | 81 |
| Referenz 2 | 4 | -0,092 | 24,1 | 11,6 | 18 | 82 |
| Referenz 3 | 4,2 | -0,015 | 25,6 | 12,3 | 18 | 81 |
| Rest | 0,3 | -2,22 | 2,8 | 0,9 | 13 | 23 |

**Tabelle 2**

| **Probe 2** | **Ra** | **Rsk** | **Rz** | **Rp** | **Rpc** | **Emissionsgrad** |
|---|---|---|---|---|---|---|
| Referenz 1 | 3,2 | -0,04 | 18,8 | 8,84 | 20 | 83 |
| Referenz 2 | 2,8 | -0,061 | 17,8 | 8,35 | 19 | 81 |
| Referenz 3 | 3,3 | 0,124 | 20,1 | 10,3 | 19 | 82 |
| Rest | 1,1 | -0,658 | 7,91 | 3,23 | 5 | 24 |

Gut zu erkennen ist, dass eine bestimmte Topografie in den Referenzbereichen zu sehr guten und hohen Emissionsgraden führen und dadurch eine nahezu exakte und wiederholgenaue Bandtemperatur an einem bewegten Metallband bestimmt werden kann, vgl. auch Figur 2.

## Patentansprüche

1. Verfahren zur Bestimmung einer Bandtemperatur an einem bewegten Metallband (1), wobei das Metallband (1) an mindestens einem Infrarotsensor (10) und/oder an mindestens einer Wärmebildkamera (10) vorbeigeführt wird, wobei der Infrarotsensor (10) und/oder die Wärmebildkamera (10) zumindest bereichsweises die Oberfläche des Metallbands (1) erfasst, **dadurch gekennzeichnet, dass** in Bewegungsrichtung des Metallbands (1) lokal Referenzbereiche (2) eingebracht worden sind, welche einen höheren Emissionsgrad aufweisen im Vergleich zur restlichen Oberfläche des Metallbands (1), wobei die lokalen Referenzbereiche (2) optisch und/oder mechanisch und/oder chemisch strukturiert werden.

2. Verfahren nach Anspruch 1, wobei der Emissionsgrad in den lokal eingebrachten Referenzbereichen (2) zwischen 65 % und bis zu 100 % eingestellt wird.

3. Verfahren nach Anspruch 1 oder 2, wobei sich die Emissionsgrade zwischen den einzelnen lokal eingebrachten Referenzbereichen (2) maximal um 15,0 % unterscheiden.

4. Verfahren nach einem der vorhergehenden Ansprüche, wobei die lokalen Referenzbereiche (2) in einem definierten Abstand zueinander in Bewegungsrichtung eingebracht werden.

5. Verfahren nach einem der vorhergehenden Ansprüche, wobei die lokalen Referenzbereiche (2) auf definierten Positionen auf dem Metallband, insbesondere in der Metallbandmitte eingebracht werden.

6. Verfahren nach einem der vorhergehenden Ansprüche, wobei die lokalen Referenzbereiche (2) im Kantenbereich des Metallbands (1) eingebracht werden.

7. Verfahren nach einem der vorhergehenden Ansprüche, wobei in den lokalen Referenzbereichen (2) eine Struktur mit folgender Oberflächencharakteristik eingestellt wird, ermittelt nach DIN EN ISO 21920-2:2022-12, Ra zwischen 2,40 µm und 10,50 µm, Rsk zwischen -0,25 und 0,25, Rz zwischen 14,5 µm und 30 µm, Rp zwischen 7,0 µm und 15,0 µm, Rpc zwischen 14 1/mm und 23 1/mm.

8. Verfahren nach einem der vorhergehenden Ansprüche, wobei die zu bestimmende Bandtemperatur oberhalb von 20 °C bis 500 °C betragen kann.

9. Verfahren nach einem der Ansprüche 1 bis 7, wobei die zu bestimmende Bandtemperatur zwischen -100 °C und 15 °C betragen kann.
